# EUROPÄISCHE PATENTSCHRIFT

(11) **EP 2 200 776 B1**
(45) Veröffentlichungstag und Bekanntmachung des Hinweises auf die Patenterteilung: **06.04.2011**
(21) Anmeldenummer: 08801314.9
(22) Anmeldetag: 09.09.2008
(51) Int. Cl.: B23F 5/20, B23Q 16/06, B23Q 16/00, B23Q 5/56

(54) **Verfahren zum Betrieb einer Wälzfräsmaschine mit motorischem Antrieb zur Aufbringung von Haltekraft auf eine Trommel**
Method for operating a gear hobber comprising a motor drive for applying a retaining force to a drum
Procédé de l'opération d'une machine à fraiser en développante à système d'entraînement à moteur, pour l'application d'une force de maintien sur un tambour

(30) Priorität: 13.09.2007 DE 102007043778
(43) Veröffentlichungstag der Anmeldung: 30.06.2010
(73) Patentinhaber: FELSOMAT GmbH & Co. KG, 75203 Königsbach-Stein (DE)
(72) Erfinder: JAEGER, Helmut, 75203 Königsbach-Stein (DE)
(74) Vertreter: Kohler Schmid Möbus
(86) Internationale Anmeldenummer: PCT/DE2008/001510
(87) Internationale Veröffentlichungsnummer: WO 2009/033467

(56) Entgegenhaltungen:
- DE-A1- 3 701 504
- DE-A1- 19 857 592
- DE-B3-102006 019 325
- GB-A- 377 225
- GB-A- 1 133 571
- US-A1- 2002 017 161

## Beschreibung

### Hintergrund der Erfindung

Die Erfindung betrifft ein Verfahren zum Betrieb einer Wälzfräsmaschine, wobei die Wälzfräsmaschine umfasst
- eine drehbar gelagerte Trommel, in der zwei Werkstückspindeln gelagert sind,
- einen Wälzfräskopf,
- einen motorischen Antrieb, mit dem die Trommel zwischen zwei Betriebspositionen verfahrbar ist, wobei in beiden Betriebspositionen jeweils eine Werkstückspindel bezüglich des Wälzfräskopfes in Bearbeitungsstellung ist,
- zwei mechanische Anschläge für die Trommel, die die beiden Betriebspositionen definieren.

Eine Wälzfräsmaschine, welche mit einem solchen Verfahren betrieben wird, ist bekannt geworden aus der DE 10 2006 019 325 B3.

Wälzfräsen ist ein vielseitiges und hochproduktives Verfahren zur Fertigung von Zahnrädern. Um die Fertigung von Zahnrädern möglichst kostengünstig durchzuführen, ist es erwünscht, Nebenzeiten an einer Wälzfräsmaschine (d.h. Zeiten, in denen an der Wälzfräsmaschine keine Werkstückbearbeitung vorgenommen werden kann, etwa wegen eines Werkstückwechsels) zu minimieren.

Aus.der DE 10 2006 019 325 B3 ist es bekannt, auf einer drehbaren Trommel zwei Werkstückspindeln anzuordnen. Während an der ersten Werkstückspindel eine Bearbeitung eines Werkstücks mit einem Wälzfräskopf stattfindet, kann an der zweiten Werkstückspindel ein bearbeitetes Werkstück gegen ein unbearbeitetes Werkstück ausgetauscht werden. Nach Abschluss der Bearbeitung an der ersten Werkstückspindel wird die Trommel in eine zweite Betriebsposition rotiert, so dass die zweite Werkstückspindel bezüglich des Wälzfräskopfs in Bearbeitungsstellung gelangt. Als Nebenzeit fällt bei dieser Wälzfräsmaschine im Wesentlichen nur die Zeit für die Umpositionierung der Trommel an.

Die Umpositionierung der Trommel zwischen den beiden Betriebspositionen erfolgt im Stand der Technik mittels eines motorischen Antriebs, der die Trommel zwischen zwei Anschlägen verfahren kann. Wenn die Trommel an einen Anschlag gelangt ist, wird die Trommel durch eine mechanische Arretierung fixiert, beispielsweise durch einen Bolzen, der in die Trommel eingreift. Sodann kann mit der Wälzfräsbearbeitung begonnen werden. Bearbeitungskräfte durch die Wälzfräsbearbeitung, die auf die Trommel einwirken, werden dabei vom Bolzen aufgenommen; die Trommel bleibt in Ruhe. Nach Abschluss der Bearbeitung wird die mechanische Arretierung gelöst und die Trommel an den anderen Anschlag verfahren.

### Aufgabe der Erfindung

Der Erfindung liegt die Aufgabe zugrunde, die Nebenzeit einer Wälzfräsmaschine weiter zu verkürzen.

### Kurze Beschreibung der Erfindung

Diese Aufgabe wird gelöst durch ein Verfahren der eingangs genannten Art, mit folgenden Schritten:
a) die Trommel wird mit dem motorischen Antrieb an den mechanischen Anschlag einer Betriebsposition gefahren;
b) der motorische Antrieb baut eine Haltekraft HK auf, mit der die Trommel gegen den mechanischen Anschlag gedrückt wird;
c) während die Trommel mit der Haltekraft HK an den mechanischen Anschlag gedrückt wird, wird an der Werkstückspindel, die in der Betriebsposition in Bearbeitungsstellung ist, eine Wälzfräsbearbeitung eines Werkstücks durchgeführt; dabei gilt für die Bearbeitungskraft BK, die durch die Wälzfräsbearbeitung des Werkstücks auf die Trommel wirkt und diese bei negativer Bearbeitungskraft BK vom mechanischen Anschlag wegzuziehen sucht oder bei positiver Bearbeitungskraft BK auf den mechanischen Anschlag zudrückt, jederzeit HK +BK>0;
d) die Schritte a) bis c) werden wenigstens einmal wiederholt, wobei in Schritt a) die Trommel an den mechanischen Anschlag der jeweils anderen

Betriebsposition gefahren wird.

Mit dem erfindungsgemäßen Verfahren ist eine Verkürzung der Nebenzeit beim Umpositionieren der Trommel möglich. Insbesondere braucht keine zeitaufwendige mechanische Arretierung und Dearretierung der Trommel zu erfolgen. Im einfachsten Fall hält der motorische Antrieb während des gesamten Schritts c) die Haltekraft aufrecht, und die Haltekraft wird konstant gehalten. Man beachte, dass in obiger Darstellung die Haltekraft HK stets positives Vorzeichen hat und die Trommel auf den Anschlag drückt. Die Betriebskraft BK hat ein negatives Vorzeichen, wenn sie die Trommel vom Anschlag wegzieht (entgegenwirkende BK). Die Betriebskraft BK hat ein positives Vorzeichen, wenn sie die Trommel auf den Anschlag drückt. Die Verfahrensführung erfolgt also so, dass in Schritt c) die resultierende Kraft am Anschlag, das ist die Summe von HK und BK, stets positiv bleibt und damit die Trommel stets gegen den Anschlag gedrückt bleibt.

Bei der Wälzfräsmaschine erfolgt im Rahmen des erfindungsgemäßen Verfahrens eine Fixierung der Trommel in den beiden Betriebspositionen nicht durch eine mechanische Arretierung der Trommel, sondern durch Aufbringung einer Haltekraft mittels des motorischen Antriebs. Dadurch kann die Zeit zum Einrasten und Lösen einer mechanischen Arretierung der Trommel in der Nebenzeit eingespart werden. Die Nebenzeit ist dadurch weiter verkürzt. Die Werkstückbearbeitung wird insgesamt schneller, und die Wälzfräsmaschine kann mit erhöhter Wirtschaftlichkeit genutzt werden.

Der motorische Antrieb der Wälzfräsmaschine ist dazu eingerichtet, die Trommel nicht nur zu bewegen, sondern auch bei stillstehender Trommel diese mit erheblicher Kraft ("Haltekraft") gegen die mechanischen Anschläge zu drücken. Der motorische Antrieb sollte dazu erfindungsgemäß bei stillstehender Trommel ein Drehmoment von wenigstens 15 Nm dauerhaft aufbringen können, ohne Schaden zu nehmen. Typischerweise umfasst der motorische Antrieb dazu einen Drehstrom-Servomotor oder einen Torque-Motor. Man beachte, dass ein herkömmlicher Elektromotor zur Aufbringung der notwendigen Haltekraft bei stillstehender Trommel nicht geeignet ist; er würde "durchbrennen" (Schmelzen der Isolation der Leiter im Elektromotor).

### Bevorzugte Varianten des erfindungsgemäßen Verfahrens

Eine bevorzugte Variante des erfindungsgemäßen Verfahrens sieht vor, dass während Schritt c) solange die Bearbeitungskraft BK negativ ist gilt: |HK| ≥ 2 2*|BK|, insbesondere |HK| ≥3*|BK|. Dadurch wird die Sicherheit eines engen Kontakts zwischen Trommel und Anschlag erhöht.

Besonders bevorzugt ist eine Verfahrensvariante, bei der der motorische Antrieb der Wälzfräsmaschine aufweist:
- ein Antriebselement, an dem der motorische Antrieb die Haltekräfte HK erzeugen kann,
- ein elastisches Verbindungselement, das die Haltekräfte HK vom Antriebselement zur Trommel überträgt, und
- eine Bremse, mit der das Antriebselement fixiert werden kann, dadurch gekennzeichnet,
dass zumindest während eines Teils von Schritt c) das Antriebselement mit der Bremse fixiert ist, dass während des fixierten Zustands des Antriebselements eine Haltekrafterzeugung am Antriebselement unterbrochen wird,
und dass im fixierten Zustand des Antriebselements die Haltekraft HK auf die Trommel durch das elastische Verbindungselement aufrecht erhalten wird. Durch das elastische Verbindungselement wird eine ausreichende Haltekraft aufrecht erhalten, auch ohne dass die Krafterzeugung am Antriebselement ständig eingeschaltet bleibt. Die Verfahrensvariante ermöglicht vielmehr eine Entlastung (Abschaltung) der Krafterzeugung während eines (idR mittleren) Teils der Wälzfräsbearbeitung eines Werkstücks (Zahnrads), so dass der motorische Antrieb geschont und seine Lebensdauer erhöht wird.

Eine vorteilhafte Weiterentwicklung dieser Verfahrensvariante sieht vor, dass in Schritt c) die Wälzfräsbearbeitung beginnt, bevor die Fixierung des Antriebselements durch die Bremse erfolgt. Die Arretierung der Bremse verzögert dann nicht den Beginn der Wälzfräsbearbeitung. Die Nebenzeit kann dadurch deutlich verkürzt werden.

Bei einer vorteilhaften Verfahrensausgestaltung dazu erfolgt die Fixierung des Antriebselements durch die Bremse in Schritt c) während einer Unterbrechung der Wälzfräsbearbeitung des Werkstücks. Dabei ist die Unterbrechung bevorzugt durch die Werkstückbearbeitung ohnehin erforderlich (beispielsweise beim Ansetzen des Wälzfräskopfs an einer neuen Stelle des Werkstücks). Alternativ erfolgt die Fixierung während einer Phase der Wälzfräsbearbeitung, in der die Bearbeitungskraft gering ist, beispielsweise wenn gilt |BK|I < 1/10 |MBK|. Dann wird im Wesentlichen die Haltekraft des motorischen Antriebs allein gespeichert. Das elastische Verbindungselement bzw. dessen Verformung sollte nicht unter ungewöhnlichen Belastungszuständen fixiert werden.

Bei einer alternativen Weiterentwicklung der oben erwähnten Verfahrensvariante erfolgt die Fixierung des Antriebselements durch die Bremse, bevor die Wälzfräsbearbeitung beginnt. Dies wird vor allem dann in Betracht kommen, wenn die Bremsenfixierung sehr viel schneller erfolgen kann als eine alternative mechanische Arretierung der Trommel des Standes der Technik.

In den Rahmen der vorliegenden Erfindung fällt auch eine Verwendung einer Wälzfräsmaschine in einem erfindungsgemäßen Verfahren, wobei die Drehachsen der Trommel und der beiden Werkstückspindeln parallel zueinander angeordnet sind, insbesondere wobei die Drehachsen der Trommel und der beiden Werkstückspindeln horizontal ausgerichtet sind. Die parallele Anordnung der Drehachsen vermeidet Unwuchten. Eine horizontale Werkstückspindelausrichtung verbessert den Späneabfluss.

Das erfindungsgemäße Verfahren wird bevorzugt eingesetzt an einer Wälzfräsmaschine, umfassend
- eine drehbar gelagerte Trommel, in der zwei Werkstückspindeln gelagert sind,
- einen Wälzfräskopf,
- einen motorischen Antrieb, mit dem die Trommel zwischen zwei Betriebspositionen verfahrbar ist, wobei in den beiden Betriebspositionen jeweils eine Werkstückspindel bezüglich des Wälzfräskopfs in Bearbeitungsstellung ist,
- zwei mechanische Anschläge für die Trommel, die die beiden Betriebspositionen definieren, die vorsieht, dass der motorische Antrieb zur Aufbringung von Haltekräften HK auf die Trommel in den beiden Betriebspositionen ausgebildet ist, wobei die Haltekräfte HK jeweils die Trommel gegen den mechanischen Anschlag der jeweiligen Betriebsposition drücken.

Besonders bevorzugt ist der motorische Antrieb so dimensioniert, dass die jeweiligen maximal aufbringbaren Haltekräfte MHK betragsmäßig größer sind als die jeweiligen maximalen entgegenwirkenden Bearbeitungskräfte MBK, die durch die Wälzfräsbearbeitung eines Werkstücks auf der jeweiligen Werkstückspindel in Bearbeitungsposition mit dem Wälzfräskopf auf die Trommel einwirken können und die Trommel vom mechanischen Anschlag der jeweiligen Betriebsposition wegzuziehen suchen. Die durch das Wälzfräsen an einer Werkstückspindel auftretenden Bearbeitungskräfte BK können (je nach Betriebsposition und Lage des Anschlags und des Wälzfräskopfs) sowohl die Trommel vom jeweiligen Anschlag wegziehen als auch zum jeweiligen Anschlag hindrücken. In jeder Betriebsposition gilt, dass jeweils die (durch geeignete Dimensionierung/Bauart des motorischen Antriebs) maximal aufbringbare Haltekraft MHK betragsmäßig größer ist als die maximale entgegenwirkende (d.h. die Trommel vom Anschlag wegdrückende) Bearbeitungskraft MBK, soweit vorhanden. Falls in einer Betriebsposition die Bearbeitungskräfte BK nur die Trommel auf den zugehörigen Anschlag drücken, beträgt die maximale entgegenwirkende Bearbeitungskraft MBK "null", und jede noch so kleine maximal aufbringbare Haltekraft MHK genügt zur Einhaltung der Bedingung |MHK|I > |MBK| in dieser Betriebsposition. Bei dieser Bauform der Wälzfräsmaschine ist sichergestellt, dass während jeder Wälzfräsbearbeitung die Trommel stets ausreichend stark an den Anschlag gedrückt werden kann, um ortsfest am Anschlag zu verbleiben, sodass die Wälzfräsbearbeitung sehr präzise erfolgen kann. Man beachte, dass die maximale Bearbeitungskraft MBK, welche bei der Wälzfräsbearbeitung auftreten kann, eine bauartbedingte Eigenschaft der Wälzfräsmaschine (und dabei insbesondere des Zustellantriebs des Wälzfräskopf) ist. MBK ist insbesondere unabhängig vom konkreten Wälzfräsprogramm.

Bei einer Weiterbildung der obigen Bauform ist der motorische Antrieb so dimensioniert, dass gilt: |MHK| ≥ 2*|MBK|,
insbesondere dass gilt: |MHK| ≥ 3*|MBK|. Dadurch wird die Sicherheit der Anlage der Trommel am jeweiligen Anschlag erhöht.

Besonders bevorzugt weist der der motorische Antrieb auf:
- ein Antriebselement, an dem der motorische Antrieb die Haltekräfte HK erzeugen kann,
- ein elastisches Verbindungselement, das die Haltekräfte HK vom Antriebselement zur Trommel überträgt, und
- eine Bremse, mit der das Antriebselement fixiert werden kann. Mit dieser Bauform kann der motorische Antrieb entlastet werden, so dass die Lebensdauer des motorischen Antriebs erhöht werden kann. Mit dem elastischen Verbindungselement wird die Haltekraft vom Antriebselement (z.B. eine unmittelbar angetriebene Motorwelle) zur Trommel übertragen, wobei sich das Verbindungselement elastisch verformt. Wird nun das Antriebselement mit der Bremse fixiert und danach die Krafterzeugung am Antriebselement abgestellt, so bleibt die Haltekraft an der Trommel aufgrund der elastischen Kraftspeicherung im Verbindungselement erhalten. Man beachte, dass die

Bremse am Antriebselement aktiviert (und gelöst) werden kann, während die Wälzfräsbearbeitung am Werkstück im Gange ist, so dass keine zusätzliche Nebenzeit durch das aktivieren und lösen der Bremse entsteht. Während eines (idR mittleren) Teils der Bearbeitungszeit eines Werkstücks kann die Krafterzeugung am motorischen Antrieb unterbrochen werden. Man beachte, dass die elastische Verformung (Längenänderung) des Verbindungselements unter der vom motorischen Antrieb aufgebrachten Haltekraft sehr viel größer sein sollte als eine etwaige Ortsänderung des Verbindungselements durch das Spiel der Bremse bezüglich des Antreibselements, um die Haltekraft aufrecht zu erhalten. Man beachte weiterhin, dass durch das elastische Verbindungselement etwaige Schwingungen der Antriebsregelung ebenfalls ausgeglichen werden können.

Bei einer bevorzugten Weiterbildung der letztgenannten Bauform umfasst das elastische Verbindungselement einen Riemen, insbesondere einen Zahnriemen. Riemen, und insbesondere Zahnriemen, sind mit guter Reißfestigkeit kostengünstig erhältlich, und die absolute elastische Verformung kann über die Länge des Riemens leicht eingestellt werden.

Eine Weiterentwicklung dazu sieht vor, dass der Riemen am Außenumfang der Trommel starr fixiert ist, insbesondere durch eine Schrauben-Verbindung oder Bolzen-Verbindung von zwei Enden des Riemens an der Trommel. Dadurch kann trommelseitig ein minimales Spiel erreicht werden.

Eine Anmerkung zu den quantitativen Kraftangaben: Soweit hier Kräfte, insbesondere Haltekräfte HK und Bearbeitungskräfte BK, quantitativ miteinander verglichen werden, erfolgt der Vergleich stets an identischen radialen Positionen bezüglich der Trommelachse, nämlich am jeweiligen Anschlag der Trommel. Auch wenn ein Krafteintrag ursächlich bei einer anderen radialen Position erfolgt, kann leicht das zugehörige Moment (das ist das Produkt aus Kraft und Radius) berechnet werden und die entsprechende Kraft am Anschlag leicht bestimmt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Seitenansicht einer Wälzfräsmaschine in einer ersten Betriebsposition;
- Fig. 2: eine schematische Aufsicht auf die Wälzfräsmaschine von Fig. 1;
- Fig. 3: eine schematische Seitenansicht der Wälzfräsmaschine von Fig. 1 in einer zweiten Betriebsposition;
- Fig. 4: ein schematische Übersicht über beispielhafte Kraftverhältnisse an einem Anschlag einer Trommel im Rahmen der Erfindung.

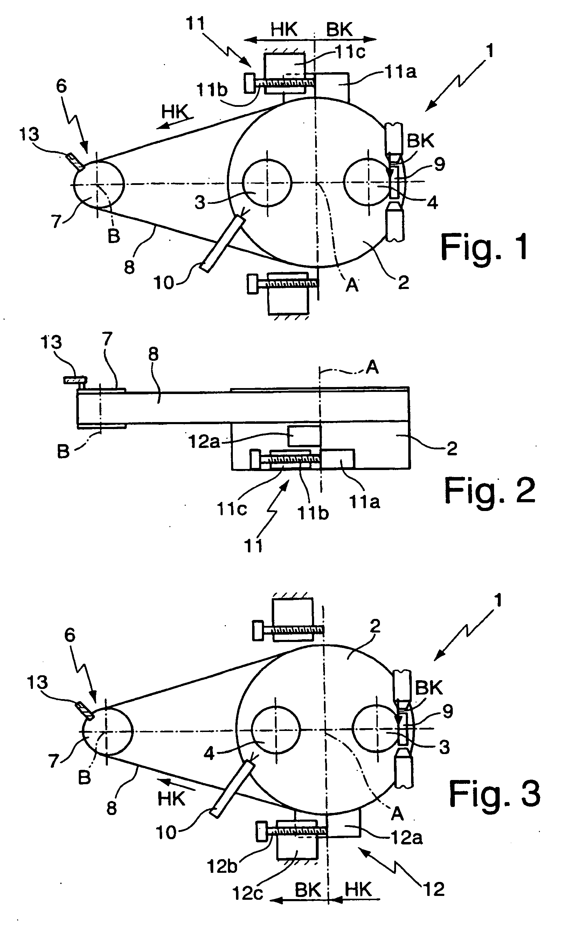

Die vorliegende Erfindung ermöglicht die beschleunigte Positionierung einer Trommel (Drehhalter) 2 einer Wälzfräsmaschine 1, wie sie in den **Figuren 1 bis 3** dargestellt ist. ,

Auf der Trommel 2 sind eine erste, horizontale Werkstückspindel 3 und eine zweite, horizontale Werkstückspindel 4 angeordnet. Die Trommel 2 ist um eine horizontale Achse A drehbar (rotierbar) gelagert.

Die Trommel 2 verfügt über einen motorischen Antrieb 6, durch den die Trommel 2 in einer ersten Funktion verfahren (gedreht) werden kann. Der motorische Antrieb 6 verfügt über ein Antriebselement 7, nämlich eine von einem Drehstrom-Servomotor (nicht dargestellt) angetriebene Welle. Das Antriebselement 7 ist um eine horizontale Achse B motorisch drehbar; am Antriebselement 7 erzeugt der motorische Antrieb 6 bei Bedarf Kraft (bzw. ein Drehmoment). Antriebselement 7 und Trommel 2 werden von einem Zahnriemen 8 als elastischem Verbindungselement umspannt. Der Zahnriemen 8 überträgt Kraft und Bewegung vom Antriebselement 7 auf die Trommel 2.

Mittels des motorischen Antriebs 6 ist die Trommel 2 zwischen zwei Betriebspositionen verfahrbar. In einer ersten Betriebsposition (Fig. 1, Fig. 2) ist die erste Werkstückspindel 3 links in einer Übergabestellung, geeignet zum Austausch eines Werkstücks auf der ersten Werkstückspindel 3 durch einen Roboterarm 10. Weiterhin befindet sich die zweite Werkstückspindel 4 bezüglich eines aufgespannten Werkstücks rechts in einer Bearbeitungsstellung für einen (nur schematisch angedeuteten) Wälzfräskopf 9. In einer zweiten Betriebsposition (Fig. 3), in der die Trommel 2 gegenüber der ersten Betriebsposition um 180° um die Achse A gedreht ist, befindet sich hingegen die erste Werkstückspindel 3 rechts in Bearbeitungsstellung und die zweite Werkstückspindel 4 links in Übergabestellung.

Durch den Aufbau der Wälzfräsmaschine 1 ist es möglich, während der Wälzfräsbearbeitung eines Werkstücks (Zahnrads) an der jeweils rechts in Bearbeitungsstellung befindlichen Werkstückspindel zeitgleich an der jeweils links in Übergabestellung befindlichen Werkstückspindel ein abgearbeitetes Werkstück gegen ein noch zu bearbeitendes Werkstück auszutauschen (bearbeitungsparalleler Werkstückwechsel). Die Zeit für den Werkstückwechsel links durch den Roboterarm 10 ist dann irrelevant für die Nebenzeit (d.h. die Zeit, in der der Wälzfräskopf 9 keine Bearbeitung durchführen kann).

Als Nebenzeit für die dargestellten Werkzeugmaschine 1 fällt im Wesentlichen nur diejenige Zeit an, die benötigt wird, um die Trommel 2 zwischen den beiden Betriebspositionen zu verfahren und an den jeweiligen Endpositionen zu sichern (fixieren).

Im Stand der Technik wird zur Sicherung der Endposition der Trommel eine mechanische Arretierung der Trommel vorgenommen, beispielsweise durch Einführen eines Sperrbolzens in eine Ausnehmung am Außenumfang der Trommel, oder durch Anpressen einer Bremsscheibe an die Trommel. Die Nebenzeit umfasst dann auch das Lösen der mechanischen Arretierung unmittelbar vor der Drehung der Trommel 2 und das Anziehen der mechanischen Arretierung unmittelbar nach dem Drehen der Trommel 2.

Die vorliegende Erfindung vermeidet diese zusätzlichen Nebenzeiten für eine mechanische Arretierung und Dearretierung der Trommel 2.

Entscheidend dafür, dass mit der Bearbeitung an der rechten Werkstückspindel in der Bearbeitungsstellung begonnen werden kann, ist nur, dass die Trommel 2 während der anstehenden Bearbeitung sicher ortsfest bleibt. Dazu wird erfindungsgemäß mit dem motorischen Antrieb 6 eine Haltekraft HK auf die Trommel 2 aufgebracht; dies stellt eine zusätzliche Funktion des motorischen Antriebs 6 dar. Mit der Haltekraft HK wird die Trommel 2 während der Bearbeitung ortsfest gehalten.

Die Wälzfräsmaschine 1 verfügt über einen ersten Anschlag 11, der einen am Außenumfang der Trommel 2 ausgebildeten ersten Vorsprung 11a und eine erste Anschlagschraube 11 b umfasst. Die erste Anschlagschraube 11 b verfügt über ein im Maschinenbett verankertes, ortsfestes Lager 11c. In der ersten Betriebsposition (Fig. 1, Fig. 2) liegt der erste Vorsprung 11 a an der ersten Anschlagschraube 11b an; dadurch wird diese erste Betriebsposition definiert. Über eine Justage der ersten Anschlagschraube 11b kann eine Feinjustage der genauen Lage der Trommel 2 in der ersten Betriebsposition erfolgen.

Wird an der zweiten Werkstückspindel 4 nun eine Bearbeitung an einem Werkstück vorgenommen, so bringt der Wälzfräskopf 9 eine Kraft (genauer ein Moment bezüglich der Achse A) in die Trommel 2 ein. Diese Kraft versucht, die Trommel 2 (bzw. den ersten Vorsprung 11 a) vom ersten Anschlag 11 (bzw. von der ersten Anschlagschraube 11b) wegzuziehen. Das Moment auf die Trommel 2 durch die Bearbeitung macht sich am Anschlag 11 als eine Bearbeitungskraft BK bemerkbar.

Um zu verhindern, dass die Trommel 2 vom Anschlag 11 wegrotiert, wird durch den motorischen Antrieb 6 noch vor Beginn der Bearbeitung eine zusätzliche Kraft (genauer ein zusätzliches Moment bezüglich der Achse A) auf die Trommel 2 aufgebracht. Dazu wird am Antriebselement 7 eine Kraft erzeugt, die über den Zahnriemen 8 auf die Trommel 2 übertragen wird. Das zusätzliche Moment macht sich als Haltekraft HK am Anschlag 11 bemerkbar.

In der ersten Betriebsposition wirken Bearbeitungskraft BK und Haltekraft HK in entgegen gesetzte Richtungen. Man beachte, dass während einer vollständigen Wälzfräsbearbeitung eines Werkstücks die Bearbeitungskraft BK in aller Regel schwankt. Erfindungsgemäß wird nun die Haltekraft HK während der gesamten Wälzfräsbearbeitung am Werkstück der zweiten Werkstückspindel 4 so groß gehalten, das die Haltekraft HK die entgegenwirkende Bearbeitungskraft BK stets übersteigt. Mit anderen Worten, die Haltekraft HK wird durch die Bearbeitungskraft niemals vollständig aufgehoben; es verbleibt stets eine resultierende Kraft (Restkraft), die die Trommel 2 am Anschlag hält. Mathematisch kann dies ausgedrückt werden als HK + BK > 0 (dabei ist die Kraftrichtung, die die Trommel an den Anschlag drückt, positiv definiert; entsprechend ist HK positiv, und eine der Haltekraft HK entgegenwirkende Bearbeitungskraft BK ist negativ). Dann bleibt die Trommel 2 während der gesamten Wälzfräsbearbeitung über bewegungslos am ersten Anschlag 11.

In der Regel wird zur Sicherstellung der obigen Bedingung die durch die Bauart der Wälzfräsmaschine 1 bedingte, maximal mögliche, entgegenwirkende Bearbeitungskraft MBK berücksichtigt (Man beachte, dass MBK unabhängig ist vom anstehenden Wälzfräsprogramm). Die Haltekraft HK wird dann während der gesamten Wälzfräsbearbeitung auf einem Wert HK > |MBK| gehalten; am einfachsten kann dazu HK konstant gehalten werden. Es versteht sich, dass die durch den motorischen Antrieb 6 maximal aufbringbare Haltekraft MHK dazu die maximale entgegenwirkende Bearbeitungskraft MBK betragsmäßig übersteigen muss. Bevorzugt wird zur Sicherheit HK ≥ 2*|MBK| oder auch HK ≥ 3*|MBK| eingestellt. Alternativ kann auch für das anstehende Wälzfräsprogramm eine während dieses Programms maximal auftretende, entgegenwirkende Bearbeitungskraft PMBK bestimmt werden, und die HK wird größer PMBK gehalten.

Die Haltekraft HK kann durch den motorischen Antrieb 6 sehr schnell aufgebaut (und abgebaut) werden, insbesondere deutlich schneller, als eine mechanische Arretierung (und Dearretierung) der Trommel 2 in der (hier) ersten Betriebsposition erfolgen könnte. Zusätzlich ist die Fixierung der Trommel 2 am ersten Anschlag 11 durch die Haltekraft HK absolut spielfrei und damit sehr viel präziser und besser reproduzierbar als eine einfache mechanische Arretierung. Somit können auch die Werkstücke auf der Wälzfräsmaschine 1 mit größerer Präzision bearbeitet werden.

Grundsätzlich ist es möglich, während der gesamten Wälzfräsbearbeitung an der zweiten Werkstückspindel 4 die Haltekraft HK mittels des motorischen Antriebs 6 aufzubringen. Durch den erwähnten Drehstrom-Servomotor wäre dieser dazu ohne Weiteres in der Lage. Allerdings kann der Verschleiß am motorischen Antrieb 6 durch die Benutzung einer Bremse 13 am Antriebselement 7 verringert werden:
Sobald der motorische Antrieb 6 die volle, vorgesehene Haltekraft HK am ersten Anschlag 11 aufgebaut hat, kann die Haltekraft HK am ersten Anschlag 11 auch ohne eine Krafterzeugung am motorischen Antrieb 6 aufrecht erhalten werden. Bei der Kraftübertragung vom Antriebselement 7 zur Trommel 2 wird der Zahnriemen 8 elastisch verformt (insbesondere im oberen, verbindenen Teil gedehnt). Die elastisch gespeicherte Federkraft im Zahnriemen 8 entspricht dabei dem momentanen Kraftübertrag (Prinzip actio gleich reactio). Wird nun das Antriebselement 7 mit einer Bremse 13 fixiert, so bleibt die im Zahnriemen 8 gespeicherte Federkraft - und damit die bisherige Haltekraft HK am ersten Anschlag 11 - unverändert erhalten (Falls die Bremse 13 ein Spiel aufweist, so wird die Haltekraft HK entsprechend dem Verhältnis Spiel zu Verformungsweg des Zahnriemens reduziert; daher sollte gegebenenfalls das E-Modul des Zahnriemens 8 ausreichend niedrig und/oder die Länge des Zahnreimens 8 ausreichend groß gewählt werden, so dass die verbleibende Haltekraft HK noch die Bearbeitungskraft BK kompensieren kann). Während der Wälzfräsbearbeitung an einer Werkstückspindel (hier die zweite Werkstückspindel 4) kann somit zeitweise die Krafterzeugung am Antriebselement 7 unterbrochen werden, ohne dass es zu einem Hattekraftverlust am Anschlag 11 der Trommel 2 kommt.

Gemäß der Erfindung kann dazu insgesamt wie folgt vorgegangen werden: Nach einem Drehen der Trommel 2 in die erste Betriebsposition wird zunächst mit dem motorischen Antrieb 6 die Haltekraft HK am ersten Anschlag 11 aufgebaut, und die Wälzfräsbearbeitung wird an der rechten Werkstückspindel 4 aufgenommen. Sodann wird die Bremse 13 am Antriebselement 7 arretiert, und der motorische Antrieb 6 wird abgeschaltet. Es folgt der Hauptteil der Bearbeitung des Werkstücks an der Werkstückspindel 4 rechts, zeitgleich erfolgt ein Werkstückwechsel an der Werkstückspindel 3 links. Kurz vor dem Ende der Bearbeitung wird die Haltekraft HK wieder vom motorischen Antrieb 6 übernommen, und die Bremse 13 wird noch während der Bearbeitung des Werkstücks an der Werkstückspindel 4 gelöst. Nach Beendigung der Bearbeitung baut der motorische Antrieb 6 die Haltekraft HK ab, und die Trommel 2 wird in die zweite Betriebsposition gedreht, und so fort.

Die zweite Betriebsposition (Fig. 3) wird durch einen zweiten Anschlag 12, mit zweitem Vorsprung 12a an der Trommel 2, zweiter Anschlagschraube 12b, und zweitem, im Maschinenbett verankerten ortsfesten Lager 12c definiert; dabei liegt der zweite Vorsprung 12a an der zweiten Anschlagschraube 12b an. Auch in der zweiten Bearbeitungsposition wird eine Haltekraft HK durch den motorischen Antrieb 6 aufgebracht, der die Trommel 2 (bzw. den zweiten Vorsprung 12a) gegen den nun zweiten Anschlag 12 (bzw. die zweite Anschlagschraube 12b) drückt. Bei der (unveränderten) Führung des Wälzfräskopfs 9 und kommt es aber hier zu einer Bearbeitungskraft BK, die die Trommel 2 an den zweiten Anschlag 12 drückt, d.h. Haltekraft HK und Bearbeitungskraft BK sind gleichgerichtet und addieren sich auf. Der Haltekraft HK entgegenwirkende Bearbeitungskräfte treten nicht auf. In diesem Fall genügt schon eine betragsmäßig sehr kleine Haltekraft HK, um die Trommel 2 während des Wälzfräsens an der ersten Werkstückspindel 3 rechts bewegungslos am Anschlag 12 zu halten.

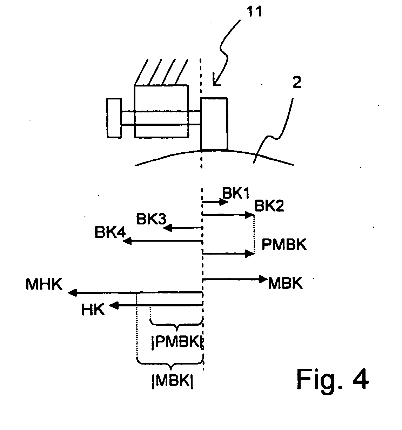

Man beachte, dass grundsätzlich auch Verfahrensführungen beim Wälzfräsen denkbar sind, die einen Wechsel von der Haltekraft HK entgegen gerichteten und gleichgerichteten Bearbeitungskräften BK während der Bearbeitung eines einzigen Werkstücks auf einer Werkstückspindel bewirken, vgl. das Beispiel von **Fig. 4****.**

Während der Wälzfräsbearbeitung eines einzelnen Werkstücks treten hier am Anschlag 11 nacheinander die vorab ermittelten Bearbeitungskräfte BK1, BK2, BK3 und BK4 auf. BK1 und BK2 sind negativ und versuchen die Trommel 2 vom Anschlag 11 wegzuziehen. BK3 und BK4 hingegen sind positiv und drücken die Trommel 2 gegen den Anschlag 11..

Es soll eine ausreichende, konstante Haltekraft für diesen Wälzfräsprogramm aufgebracht werden (Anmerkung: die Haltekraft ist stets positiv). Die notwendige Haltekraft orientiert sich an der im anstehenden Wälzfräsprogramm maximal auftretenden, der Haltekraft HK entgegen gerichteten Bearbeitungskraft PMBK. In diesem Fall bestimmt BK2 die PMBK (BK4, die betragsmäßig größer ist als BK2, ist irrelevant, weil BK4 mit der HK gleichgerichtet ist). Wird die Haltekraft HK konstant größer gewählt als |PMBK|, so wird im anstehenden Wälzfräsprogramm die Trommel 2 stets am Anschlag bleiben. Man beachte, dass es auch möglich wäre, die Haltekraft während des Wälzfräsprogramms zu variieren; es muss nur zu jeder Zeit die am Anschlag resultierende Kraft positiv bleiben, d.h. HK + BK > 0.

Im Allgemeinen ist es jedoch nicht erwünscht, zunächst für jedes Wälzfräsprogramm eine PMBK zu bestimmen, um dann eine passende Haltekraft vorzugeben. Einfacher ist es, die maximale Kraft zu bestimmen, mit der die Trommel durch die Wälzfräsbearbeitung eines Werkstücks bei der gegebenen Wälzfräsmaschine vom Anschlag weggezogen werden kann. Diese Kraft MBK ist durch die Bauart der Wälzfräsmaschine bedingt. Bei allen denkbaren Wälzfräsprogrammen auf der Wälzfräsmaschine wird im höchstens MBK als der Haltekraft entgegenwirkende Bearbeitungskraft auftreten. Im vorliegenden Fall ist MBK betragsmäßig noch ein klein wenig größer als BK2.

Der motorische Antrieb 6 der Wälzfräsmaschine ist erfindungsgemäß so dimensioniert, dass er mit seiner maximalen Haltekraft MHK die MBK kompensieren kann, d.h. |MHK| > |MBK|. Dann ist die Wälzfräsmaschine grundsätzlich für alle denkbaren Wälzfräsprogramme verwendbar.

Im vorliegenden Beispiel ist ein motorischer Antrieb 6 vorhanden, der deutlich stärker ist als notwendig, denn seine MHK ist hier betragsmäßig ungefähr doppelt so groß ist wie MBK. Wird nun während des Wälzfräsens die Haltekraft HK betragsmäßig zwischen MBK und MHK gewählt, so wird die Trommel 2 zuverlässig ortsfest am Anschlag gehalten, und zwar bei jedem denkbaren Wälzfräsprogramm.

## Patentansprüche

1. Verfahren zum Betrieb einer Wälzfräsmaschine (1), wobei die Wälzfräsmaschine (1) umfasst
- eine drehbar gelagerte Trommel (2), in der zwei Werkstückspindeln (3, 4) gelagert sind,
- einen Wälzfräskopf (9),
- einen motorischen Antrieb (6), mit dem die Trommel (2) zwischen zwei Betriebspositionen verfahrbar ist, wobei in den beiden Betriebspositionen jeweils eine Werkstückspindel (3,4) bezüglich des Wälzfräskopfs (9) in Bearbeitungsstellung ist,
- zwei mechanische Anschläge (11, 12) für die Trommel (2), die die beiden Betriebspositionen definieren,
mit folgenden Schritten:
a) die Trommel (2) wird mit dem motorischen Antrieb (6) an den mechanischen Anschlag (11, 12) einer Betriebsposition gefahren;
b) der motorische Antrieb (6) baut eine Haltekraft HK auf, mit der die Trommel (2) gegen den mechanischen Anschlag (11, 12) gedrückt wird;
c) während die Trommel (2) mit der Haltekraft HK an den mechanischen Anschlag (11, 12) gedrückt wird, wird an der Werkstückspindel (3, 4), die in der Betriebsposition in Bearbeitungsstellung ist, eine Wälzfräsbearbeitung eines Werkstücks durchgeführt;
dabei gilt für die Bearbeitungskraft BK, die durch die Wälzfräsbearbeitung des Werkstücks auf die Trommel (2) wirkt und
diese bei negativer Bearbeitungskraft BK vom mechanischen Anschlag. (11, 12) wegzuziehen sucht oder bei positiver Bearbeitungskraft BK auf den mechanischen Anschlag (11, 12) zudrückt, jederzeit HK + BK > 0;
d) die Schritte a) bis c) werden wenigstens einmal wiederholt, wobei in Schritt a) die Trommel (2) an den mechanischen Anschlag (11, 12) der jeweils anderen Betriebsposition gefahren wird.

2. Verfahren nach Anspruch 1, **dadurch gekennzeichnet, dass** während Schritt c) solange die Bearbeitungskraft BK negativ ist gilt: |HK| ≥ 2*|BK|, insbesondere |HK| ≥ 3*|BK|.

3. Verfahren gemäß Anspruch 1 oder 2 zum Betrieb einer
Wälzfräsmaschine (1), bei der der motorische Antrieb (6) der Wälzfräsmaschine(1) aufweist:
- ein Antriebselement (7), an dem der motorische Antrieb (6) die Haltekräfte HK erzeugen kann,
- ein elastisches Verbindungselement, das die Haltekräfte HK vom Antriebselement (7) zur Trommel (2) überträgt, und
- eine Bremse (13), mit der das Antriebselement (7) fixiert werden kann,
**dadurch gekennzeichnet,**
**dass** zumindest während eines Teils von Schritt c) das Antriebselement (7) mit der Bremse (13) fixiert ist,
**dass** während des fixierten Zustands des Antriebselements (7) eine Haltekrafterzeugung am Antriebselement (7) unterbrochen wird,
und **dass** im fixierten Zustand des Antriebselements (7) die Haltekraft HK auf die Trommel (2) durch das elastische Verbindungselement aufrecht erhalten wird.

4. Verfahren nach Anspruch 3; **dadurch gekennzeichnet, dass** in Schritt c) die Wälzfräsbearbeitung beginnt, bevor die Fixierung des Antriebselements (7) durch die Bremse (13) erfolgt.

5. Verfahren nach Anspruch 4, **dadurch gekennzeichnet, dass** die Fixierung des Antriebselements (7) durch die Bremse (13) in Schritt c) während einer Unterbrechung der Wälzfräsbearbeitung des Werkstücks erfolgt.

6. Verfahren nach Anspruch 3, **dadurch gekennzeichnet, dass** die Fixierung des Antriebselements (7) durch die Bremse (13) erfolgt, bevor die Wälzfräsbearbeitung beginnt.

7. Verfahren nach einem der Ansprüche 1 oder 2, **dadurch gekennzeichnet, dass** während der gesamten Wälzfräsbearbeitung des Werkstücks in Schritt c) die Haltekraft HK mittels des motorischen Antriebs (6) aufgebracht wird.

8. Verwendung einer Wälzfräsmaschine in einem Verfahren gemäß einem der Ansprüche 1 bis 7, wobei die Drehachsen (A) der Trommel (2) und der beiden Werkstückspindeln (3, 4) parallel zueinander angeordnet sind, insbesondere wobei die Drehachsen (A) der Trommel (2) und der beiden Werkstückspindeln (3, 4) horizontal ausgerichtet sind.

## Claims

1. Method for operating a hobbing machine (1), wherein the hobbing machine (1) comprises
- a rotatably disposed drum (2) in which two workpiece spindles (3, 4) are disposed,
- a hobbing head (9),
- a motor drive (6) by means of which the drum (2) can be displaced between two operating positions, wherein one workpiece spindle (3, 4) is in an operating position relative to the hobbing head (9) in each of the two operating positions,
- two mechanical stops (11, 12) for the drum (2) which define the two operating positions,
comprising the following steps:
a) the drum (2) is moved to the mechanical stop (11, 12) of an operating position by means of the motor drive (6);
b) the motor drive (6) builds up a holding force HK by means of which the drum (2) is forced against the mechanical stop (11, 12);
c) while the drum (2) is being forced to the mechanical stop (11, 12) by the holding force HK, hobbing of a workpiece is carried out on the workpiece spindle (3, 4) which is in the operating position in the processing position;
whereby HK+BK>0 applies at any time for the processing force BK that acts on the drum (2) due to hobbing of the workpiece and tries to pull away the drum (2) from the mechanical stop (11, 12) in case of a negative processing force BK, or exerts a force onto the mechanical stop (11, 12) in case of a positive processing force BK;
d) the steps a) to c) are repeated at least once, wherein the drum (2) is moved to the mechanical stop (11, 12) of the respective other operating position in step a).

2. Method according to claim 1, **characterized in that** during step c), |HK| ≥ 2* |BK| in particular |HK| ≥3* |BK|, as long as the processing force BK is negative.

3. Method according to claim 1 or 2 for operating a hobbing machine (1), wherein the motor drive (6) of the hobbing machine (1) comprises:
- a drive element (7) on which the motor drive (6) can generate the holding forces HK,
- an elastic connecting element which transfers the holding forces HK from the drive element (7) to the drum (2), and
- a brake (13) for fixing the drive element (7),
**characterized in that**
at least during part of step c), the drive element (7) is fixed with the brake (13),
in the fixed state of the drive element (7), generation of a holding force on the drive element (7) is interrupted,
and in the fixed state of the drive element (7), the holding force HK acting on the drum (2) is maintained by the elastic connecting element.

4. Method according to claim 3, **characterized in that** the hobbing process starts in step c) prior to fixing the drive element (7) by the brake (13).

5. Method according to claim 4, **characterized in that** the drive element (7) is fixed by the brake (13) in step c) during an interruption of the hobbing process of the workpiece.

6. Method according to claim 3, **characterized in that** the drive element (7) is fixed by the brake (13) prior to start of the hobbing process.

7. Method according to any one of the claims 1 or 2, **characterized in that** the holding force HK is provided by means of the motor drive (6) throughout the overall hobbing process of the workpiece in step c).

8. The use of a hobbing machine in a method according to any one of the claims 1 through 7, wherein the axes of rotation (A) of the drum (2) and of the two workpiece spindles (3, 4) are disposed parallel to one another, in particular, wherein the axes of rotation (A) of the drum (2) and of the two workpiece spindles (3, 4) are oriented in a horizontal direction.

## Revendications

1. Procédé d'actionnement d'une machine (1) de taillage en développante, ladite machine (1) de taillage en développante comprenant
- un tambour (2) monté à rotation, dans lequel deux broches (3, 4) porte-pièces sont montées,
- une tête (9) de taillage en développante,
- un entraînement motorisé (6) à l'aide duquel ledit tambour (2) peut être mû entre deux emplacements fonctionnels, sachant que, aux deux emplacements fonctionnels, une broche respective (3, 4) porte-pièces est en position d'usinage vis-à-vis de ladite tête (9) de taillage en développante,
- deux butées mécaniques (11, 12), destinées audit tambour (2) et définissant les deux emplacements fonctionnels,
englobant les étapes suivantes :
a) le tambour (2) est amené, par l'entraînement motorisé (6), contre la butée mécanique (11, 12) assignée à un emplacement fonctionnel ;
b) ledit entraînement motorisé (6) génère une force de maintien HK par laquelle ledit tambour (2) est plaqué contre ladite butée mécanique (11, 12) ;
c) alors même que ledit tambour (2) est plaqué contre ladite butée mécanique (11, 12) par ladite force de maintien HK, une opération de taillage en développante d'une pièce à usiner est exécutée sur la broche (3, 4) porte-pièces qui occupe une position d'usinage à l'emplacement fonctionnel ;
la relation HK + BK > 0 s'appliquant, en permanence, à la force d'usinage BK qui agit sur le tambour (2) du fait de l'opération de taillage en développante de la pièce à usiner, et a tendance à éloigner ce dernier de la butée mécanique (11, 12) en présence d'une force d'usinage BK négative, ou le plaque contre ladite butée mécanique (11, 12) en présence d'une force d'usinage BK positive ;
d) les étapes a) à c) sont répétées au moins une fois, ledit tambour (2) étant amené, durant l'étape a), contre la butée mécanique (11, 12) de l'autre emplacement fonctionnel considéré.

2. Procédé selon la revendication 1, **caractérisé par le fait que**, durant l'étape c), aussi longtemps que la force d'usinage BK est négative, la relation s'appliquant est |HK| ≥ 2* |BK|, en particulier |HK| 3* |BK|.

3. Procédé selon la revendication 1 ou 2, pour l'actionnement d'une machine (1) de taillage en développante, l'entraînement motorisé (6) de ladite machine (1) de taillage en développante présentant :
- un élément d'entraînement (7) sur lequel ledit entraînement motorisé (6) peut générer les forces de maintien HK,
- un élément élastique de liaison, répercutant lesdites forces de maintien HK sur le tambour (2) à partir dudit élément d'entraînement (7), et
- un frein (13) par lequel ledit élément d'entraînement (7) peut être arrêté,
**caractérisé par le fait**
**que** l'élément d'entraînement (7) est arrêté, par le frein (13), au moins durant une partie de l'étape c),
**qu'**une génération de force de maintien, sur ledit élément d'entraînement (7), est interrompue lorsque ledit élément d'entraînement (7) est à l'état arrêté,
et **que** la force de maintien HK, appliquée au tambour (2), est entretenue par ledit élément élastique de liaison à l'état arrêté dudit élément d'entraînement (7).

4. Procédé selon la revendication 3, **caractérisé par le fait que** l'opération de taillage en développante débute, à l'étape c), avant que l'arrêt de l'élément d'entraînement (7) s'effectue sous l'action du frein (13).

5. Procédé selon la revendication 4, **caractérisé par le fait que** l'arrêt de l'élément d'entraînement (7) sous l'action du frein (13) s'effectue, à l'étape c), au cours d'une interruption de l'opération de taillage en développante de la pièce à usiner.

6. Procédé selon la revendication 3, **caractérisé par le fait que** l'arrêt de l'élément d'entraînement (7), sous l'action du frein (13), s'effectue avant le début de l'opération de taillage en développante.

7. Procédé selon l'une des revendications 1 ou 2, **caractérisé par le fait que** la force de maintien HK est appliquée au moyen de l'entraînement motorisé (6), à l'étape c), durant l'intégralité de l'opération de taillage en développante de la pièce à usiner.

8. Utilisation d'une machine de taillage en développante dans un procédé conforme à l'une des revendications 1 à 7, les axes de rotation (A) du tambour (2) et des deux broches (3, 4) porte-pièces étant mutuellement parallèles, sachant notamment que lesdits axes de rotation (A) dudit tambour (2) et desdites deux broches (3, 4) porte-pièces sont orientés horizontalement.
